# EUROPEAN PATENT SPECIFICATION

(11) **EP 4 407 223 B1**
(45) Date of publication and mention of the grant of the patent: **22.04.2026**
(21) Application number: 23152996.7
(22) Date of filing: 24.01.2023
(51) Int. Cl.: F16L 11/15, B64D 37/30, F16L 51/02

(54) **GAS DISTRIBUTION SYSTEM FOR AIRCRAFTS**
GASVERTEILUNGSSYSTEM FÜR FLUGZEUGE
SYSTÈME DE DISTRIBUTION DE GAZ POUR AÉRONEFS

(43) Date of publication of application: 31.07.2024
(73) Proprietor: Airbus Operations GmbH, 21129 Hamburg (DE)
(72) Inventor: Becks, Ralf, 21129 Hamburg (DE); Knobloch, Jens-Peter, 21129 Hamburg (DE); Popken, Gerke, 21129 Hamburg (DE); Janz, Arno, 21129 Hamburg (DE); Schmidt, Lennart, 21129 Hamburg (DE)

(56) References cited:
- EP-A1- 2 253 878
- DE-A1- 102011 010 385
- US-A- 5 600 752
- US-A1- 2013 042 478

## Description

### TECHNICAL FIELD

The present disclosure relates to gas distribution systems in general, and in particular to Hydrogen distribution systems for aircrafts.

### TECHNICAL BACKGROUND

**In** light of environmental protection efforts, Hydrogen (H₂) becomes increasingly important as an energy carrier. However, in aeronautic applications, such as in aircrafts, the strict requirements are particularly hard to fulfill.

By nature, because of the lightweight construction of aircrafts, the aircraft itself during flight is a highly dynamic environment which deforms, e.g., during flight maneuvers or in turbulent atmosphere. Since any Hydrogen system in the aircraft needs to be attached to the aircraft in some way, these deformations are propagated to the Hydrogen system, and in particular to any piping/distribution system for the Hydrogen. Therefore, for such piping/distribution systems (such as in general for every piping within an airplane) such deformations need to be considered.

The above is particularly important in light of a second main requirement for Hydrogen systems in aircrafts, namely the tightness of the system, to avoid leakages. Hydrogen is very volatile and, because of the small molecular cross section, diffuses through many materials, i.e., these materials are very permeable for Hydrogen. This problem is further amplified by the Hydrogen embrittlement occurring in many materials. Further, every standard sealed connection (i.e., bolted flange with O-rings, for example) cannot achieve a zero-leakage-rate, and even to gain a very low leakage rate, big efforts on design and stress are needed (e.g., with regard to the clamping forces, surface roughness, etc.). However, in particular in aircraft applications, the tightness of the system is very important to avoid fire hazards caused by Oxyhydrogen gas, which forms when leaking Hydrogen comes into contact with surrounding Oxygen. To further reduce such fire hazards (in addition to reducing leakage), ignition sources, such as sparking due to electrostatic discharges in the vicinity of Hydrogen leakages need to be avoided as far as possible.

Documents EP 2 253 878 A1, US 5 600 752 A and US 2013/042478 A1 disclose fluid distribution systems.

Currently, no technologies are known for an appropriate distribution system for Hydrogen within an aircraft, that accounts for the above problems. The double-walled distribution of fuel inside the fuselage, as is known in aviation, is not suitable for the distribution of Hydrogen within an aircraft due to the expected high leakage rates caused by the dynamic sealings used in such systems.

### DESCRIPTION

It is an objective to provide a flexible gas distribution system for aircrafts with high mechanical compensation capabilities and low gas leakage and permeation.

This objective is solved by the invention as defined in appended independent claim 1. Further embodiments are described in the dependent claims as well as in the following description.

According to a first aspect, a gas distribution system for aircrafts is provided. The gas distribution system comprises a corrugated hose having a first connecting end and a second connecting end, and a shroud. The shroud surrounds the corrugated hose concentrically along a longitudinal direction of the corrugated hose, thereby building an intermediate space between the corrugated hose and the shroud. The first connecting end is configured to be connected to a gas tank. The second connecting end is configured to be connected to a gas consumer. The corrugated house is flexible so as to compensate for in-flight deflections of the gas distribution system.

The gas distribution system functionally corresponds to a "piping system" for gaseous fuel.

The corrugated hose is an elongated tube-like element that builds a conducting space for a fluid, such as gaseous fuel (e.g., gaseous Hydrogen). The corrugated hose may be a flexible cylindrical hollow element extending in a generally longitudinal direction and having corrugates or ripples/grooves that each extend in a circumferential direction of the corrugated hose, i.e., perpendicular to the longitudinal direction. Therefore, in a cross-section along the longitudinal direction, the corrugates build a wave-like pattern. As such, the corrugated hose is flexible in that sense, that it may compensate for deflections within the aircraft, i.e., yield to mechanical loads inserted into the corrugated hose. **In** other words, the corrugations allow for the corrugated hose to deform appropriately in response to mechanical loads acting onto the hose, such that the loads are compensated. Although described as a cylindrical element, it should be appreciated that a cross-section of the corrugated hose perpendicular to the longitudinal direction may also have shapes other than cylindrical, such as rectangular, square, or any other suitable shape.

The corrugated hose may, in general, comprise or consist of a gas-tight material. **In** embodiments where the gas distribution system is used for Hydrogen, the corrugated hose may, in particular, comprise or consist of a material exhibiting a very low permeation for Hydrogen, such that diffusion of Hydrogen through the corrugated hose is reduced.

Further, the corrugated hose may optionally comprise an inner liner, i.e., an additional flat but flexible layer (such as, for example, a foil). Such an inner liner may flatten the inner surface of the corrugated hose to avoid or reduce pressure losses and/or flow losses caused by turbulences that may otherwise occur at the corrugations of the corrugated hose when the fluid (e.g., Hydrogen) passes by.

The first connecting end and the second connecting end both correspond to openings at opposite sides in the "tube" defined by the corrugated hose and act as inlet and outlet openings of the gas conducted/distributed by the gas distribution system, respectively. The first connecting end may, for example, be connected to an outlet of a gas tank. The second connecting end may be connected to an inlet of a gas consumer, for example (in the case of a Hydrogen distribution system) a Hydrogen consumer such as a corresponding turbine or any other consumer. Therefore, when mounted into a gas fuel system, the corrugated hose of the gas distribution system directs the gas from the gas tank to the gas consumer.

However, it should be appreciated that the corrugated hose may also consist of multiple single corrugated hose elements that are added together. For example, a first corrugated hose element and a second corrugated hose element may be added together and sealed, such that the two corrugated hose elements together build the corrugated hose. **In** this case, the shroud also consists of corresponding single shroud elements surrounding the corresponding corrugated hose element. **In** such a configuration the second end of the first corrugated hose element is connected to the first end of the second corrugated hose element. The first end of the first corrugated hose element may then be connected to the gas tank and the second end of the second corrugated hose element may be connected to the gas consumer. Further, such a single corrugated hose element may have a branch or splitting point, such that, for example, two or more additional corrugated hose elements (and with it shroud elements) are connected to one end of the first corrugated hose element, thereby building a network of a gas distribution system comprising multiple corrugated hoses and corresponding shrouds. Each of the single gas distribution systems built in this way by the single corrugated hoses and shrouds may be configured according to any one of the embodiments described herein.

Because the corrugated hose is flexible in the above manner, a single continuous (uninterrupted) hose between the gas tank and the gas consumer may be used. This avoids additional sealings within single segments, such as necessary in regular piping systems, and therefore avoids potentially additional leakage points at such sealings. The disclosed gas distribution system only needs sealings at the endings of the corrugated hose and shroud.

The shroud surrounds the corrugated hose in a cladding-like manner concentrically and also extends in the longitudinal direction, in order to protect the corrugated hose and to establish the necessary mechanical stiffness. For this purpose, the shroud itself is non-flexible. The shroud and the corrugated hose together build an intermediate space between them in a radial direction, which may, for example (as described further below) be filled with a quenching medium, to decrease fire or explosion hazards. Just as the corrugated hose, the shroud is configured to be connected to a gas tank and a gas consumer on its respective ends. However, the shroud does not conduct the fuel gas. To build a sealed intermediate space, the ends of the shroud are sealed against the gas tank and the gas consumer, e.g., by means of conventional sealings.

According to an embodiment, the gas distribution system further comprises a plurality of spacers in the intermediate space, keeping the corrugated hose and the shroud at a radial distance to each other and thereby avoiding chafing between the corrugated hose and the shroud. The spacers are spaced apart from each other along the longitudinal direction.

Such spacers may, for example, be regular plastic spacers or other suitable spacers for holding the shroud at a defined radial distance to the corrugated hose.

The gas distribution system further comprises at least one bellows connecting a first portion of the shroud with a second portion of the shroud, so that the first portion and the second portion are moveable with regard to each other.

The at least one bellows may, for example, be a steel bellows which also has a wave-like cross-section in the longitudinal direction. The corrugated hose extends through the bellows without contacting it. The bellows itself is connected to the first portion and the second portion of the shroud and interconnects these portions with each other. **In** other words, the bellows defines a first section of the shroud and a second section of the shroud an connects these section with each other. Since the shroud itself, or rather the first portion and the second portion of the shroud are made from a stiff material (to provide the necessary mechanical overall stiffness), it is necessary to provide the shroud with compensation capabilities similar to those of the corrugated house. Therefore, the bellows may compensate for deflections (e.g., by slight deformations), while the shroud itself is stiff and mechanically supports the whole structure of the gas distribution system on a large scale. The bellows may be made from a gas tight (in particular embodiments especially hydrogen-tight) material providing low permeation of the gas. For example, the bellows may be made from steel.

According to another embodiment, the intermediate space is filled with a quenching medium.

Such a quenching medium separates the gas inside the corrugated hose from the surrounding air, and therefore from the Oxygen contained therein. When the gas inside the corrugated hose (in particular Hydrogen in certain embodiments) diffuses through the wall of the corrugated hose, the gas first enters the intermediate space and is mixed and diluted with the quenching medium. The quenching medium itself is an inert (chemically non-reactive) medium, which helps suppress building of dangerous gas mixtures of the gas with the surrounding Oxygen (if the gas inside the corrugated hose is Hydrogen, in particular the formation of Oxyhydrogen gas is avoided).

According to another embodiment, the quenching medium is a quenching gas.

Such a quenching gas may be any suitable inert gas, such as Nitrogen, Helium, Argon, Xenon, that helps to prevent formation of dangerous gas mixtures.

According to another embodiment, the quenching gas is Nitrogen.

Nitrogen is an inert gas that is suitable to avoid formation of Oxyhydrogen by avoiding contact between the gas conducted in the corrugated hose and the surrounding Oxygen.

According to another embodiment, the shroud comprises at least two flushing openings for flushing the intermediate space and/or filling the intermediate space with a quenching medium.

The flushing openings may be used to initially fill the intermediate space with the quenching medium after the gas distribution system has been installed between the gas tank and the gas consumer.

Further, especially in Hydrogen applications, since Hydrogen diffusion through the walls of the corrugated hose is relatively high because of the small molecular cross section of the Hydrogen molecules, the quenching medium accumulates Hydrogen over time. Therefore, it may be necessary to exchange the quenching medium from time to time. For this purpose, for example, a first flushing opening may be present at one end of the shroud and a second flushing opening may be present at the other end of the shroud. The flushing openings are penetrating the shroud but do not penetrate the corrugated hose, such that the flushing openings are openings into the intermediate space from the outside of the gas distribution system. When the quenching medium is to be exchanged, new quenching medium may be pumped into one of the flushing openings and the old quenching medium may be removed through the other flushing opening, for example by means of a corresponding pump that can be connected to the flushing opening. When no exchange of the quenching medium takes place, the flushing opening may be closed and sealed with corresponding seals.

According to another embodiment, the gas distribution system is a distribution system for gaseous Hydrogen.

According to another embodiment, the corrugated hose comprises a material having a low permeability for Hydrogen.

This decreases diffusion of Hydrogen from the corrugated hose into the intermediate space and therefore also to the outside.

According to another embodiment, the corrugated hose comprises steel.

Steel provides for a low permeation/diffusion of Hydrogen molecules and therefore is a preferred material for the corrugated hose and for the shroud. However, other low diffusion materials are conceivable, too. Further, steel is easy to weld and can be tested for Hydrogen-tightness. Also, steel by nature is electrically conductive and therefore decreases the probability of electrostatic discharges that might ignite Oxyhydrogen gas that might be present because it is in general not possible to have an absolutely Hydrogen-tight system. Therefore, using steel for the corrugated hose (and the shroud) decrease the risk of ignition and therefore of fires or explosions.

According to another embodiment, the shroud comprises steel.

Additionally to the low permeability for Hydrogen, steel for the shroud is in particular advantageous because the bellows preferably is made from steel, too. This allows for the shroud and the bellows to be welded together. Further, using steel for the shroud improves fire protection and mechanical protection for the corrugated hose because of the high fire resistance and good mechanical stability.

According to another embodiment, the corrugated hose comprises an elastomer.

Such an elastomer also provides low diffusion of Hydrogen and may be conceivable, too, although steel is the preferred material.

According to another embodiment, the materials of the corrugated hose and of the shroud each comprise a very low tendency for electrostatic discharge.

Such materials (e.g., steel, as described above) decrease the ignition risk.

According to another embodiment, the first connecting end and the second connecting end each comprise a gas-tight sealing.

Such a gas-tight sealings may be a conventional gas-tight sealing, such as O-rings. However, because the full distance between the gas tank and the gas consumer is covered by the corrugated hose, such conventional sealings can be used only at the connecting ends of the corrugated hose. Additional sealings connecting sections, such as in standard tubing systems, are avoided, thereby decreasing gas diffusion, and increasing gas-tightness of the gas distribution system.

According to a second aspect, an aircraft is provided. The aircraft comprises a fuselage, a Hydrogen consumer, a Hydrogen tank, and a gas distribution system (10) as described above. The gas distribution system fluidly connects the Hydrogen tank with the Hydrogen consumer, so that the Hydrogen consumer receives Hydrogen from the Hydrogen tank via the gas distribution system.

The Hydrogen consumer may, for example, be a Hydrogen turbine, a fuel cell, or any other Hydrogen consumer. The gas distribution system conducts gaseous Hydrogen from the Hydrogen tank to the Hydrogen consumer. The gas distribution may be configured according to any one of the embodiments described above.

**In** summary, the present disclosure provides a gas distribution system, that is in particular suitable for Hydrogen conduction between a Hydrogen tank and a Hydrogen consumer in aircrafts, but may be used for other gases, too. The configuration of a single corrugated hose and a shroud with at least one bellows surrounding the house and defining an intermediate space between the shroud and the corrugated hose provides a gas distribution system, that compensates for deflections, for example during flight maneuvers, but still provides the necessary overall stiffness. Providing a quenching medium, such as a Nitrogen gas, within the intermediate space further decreases explosion risks caused by dangerous Oxyhydrogen gas formed by Hydrogen diffusion. The used materials for the components, in particular steel, further provide low electrostatic discharge probabilities, further enhancing fire and explosion protection. A bellows (preferably from steel) may further be used to compensate for deflections transferred via the shroud. Further, using steel for the bellows, too, adds to the fire protection and mechanical protection for the corrugated hose.

### BRIEF DESCRIPTION OF THE DRAWINGS

In the following, exemplary embodiments are described in more detail having regard to the attached figures. The illustrations are schematic and not to scale. Identical reference signs refer to identical or similar elements. The figures show:
- **Fig. 1**: A schematic view of a gas distribution system.
- **Fig. 2**: A schematic cut view the gas distribution system of Fig. 1.
- **Fig. 3**: A schematic view of an aircraft comprising a Hydrogen consumer, a Hydrogen tank, and the gas distribution system of Figs. 1 and 2.

### DETAILLED DESCRIPTION

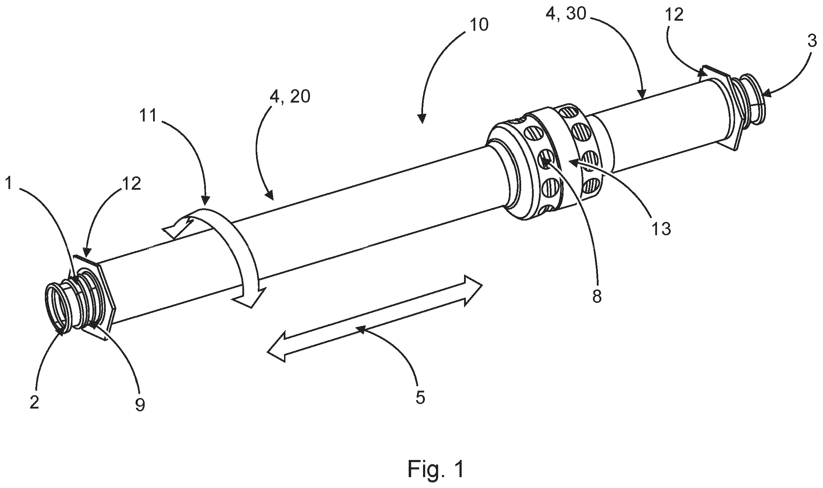

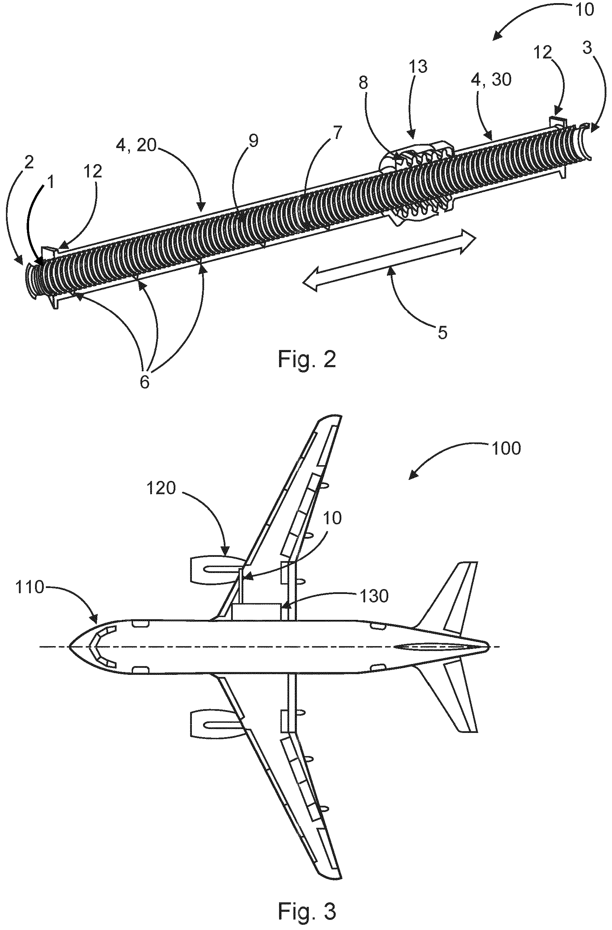

Figs. 1 and show a gas distribution system 10 for Hydrogen for an aircraft 100. Fig. 1 shows a schematic isometric view of the gas distribution system 10. Fig. 2 shows a cut-view along a longitudinal direction 5 of the gas distribution system 10 of Fig. 1. In the following, Figs. 1 and 2 will be described together.

The gas distribution system 10 comprises a corrugated hose 1 (best seen in Fig. 2), a shroud 4 (best seen in Fig. 1) and a bellows 8. The shroud 4 comprises a first portion 20 and a second portion 30. The first portion 20 and the second portion 30 of the shroud 4 are connected by the bellows 8. In the depicted configuration, the corrugated hose 1 extends along the full length of the gas distribution system 10. However, as described further above, it should be appreciated that the corrugated hose 1 as a whole may also consist of single corrugated hose elements added together. The shroud 4 (first portion 20 of the shroud 4 and second portion 30 of the shroud 4) as well as the bellows 8 surround the corrugated hose 1 concentrically and along the longitudinal direction 5 of the gas distribution system 10. Spacers 6 hold the shroud 4 at a defined radial distance to the corrugated hose 1 and avoid chafing between the corrugated hose 1 and the shroud 4.

The shroud 4 protects the corrugated hose 1 and establishes the necessary mechanical stiffness. For this purpose, the shroud 4 itself is non-flexible. The shroud 4 and the corrugated hose 1 together build an intermediate space 7 between them in a radial direction, which is (as described above and below) filled with a Nitrogen quenching gas, to decrease fire or explosion hazards. The shroud 4 is configured to be connected to a Hydrogen tank 130 (see Fig. 3) and a Hydrogen consumer 120 on its respective ends. However, the shroud 4 does not conduct the Hydrogen. To build a sealed intermediate space 7, the ends of the shroud 4 are sealed against the Hydrogen tank 130 (Fig. 3) and the Hydrogen consumer 120 (Fig. 3), e.g., by means of conventional sealings at flanges 12. The flanges 12 may, for example, be welded or bolted to the Hydrogen tank 130 and the Hydrogen consumer 120, respectively.

The intermediate space 7 between the corrugated hose 1 and the shroud 4 is filled with a Nitrogen quenching gas (not shown). Such a Nitrogen quenching gas separates the Hydrogen inside the corrugated hose 1 from the surrounding air, and therefore from the Oxygen contained therein. When the Hydrogen inside the corrugated hose 1 diffuses through the wall of the corrugated hose 1, the Hydrogen first enters the intermediate space 7 and is mixed and diluted with the Nitrogen quenching gas. The Nitrogen quenching gas itself is an inert (chemically non-reactive) gas, which helps suppress formation of dangerous gas mixtures of the Hydrogen with the surrounding Oxygen (i.e., the formation of Oxyhydrogen), which would be an explosion risk.

A first connecting end 2 of the corrugated hose 1 is configured to be connected to a Hydrogen tank 130 (see Fig. 3). A second connecting end 3 of the corrugated hose 1 is configured to be connected to a Hydrogen consumer 120, such as a Hydrogen turbine (see Fig. 3). Therefore, the corrugated hose 1 conducts the Hydrogen gas from the Hydrogen tank 130 to the Hydrogen consumer 120.

The corrugated hose 1 is an elongated tube-like element that builds a conducting space for a fluid, such as gaseous fuel (e.g., gaseous Hydrogen in the shown example). The corrugated hose 1 is a flexible cylindrical hollow element extending generally in the longitudinal direction 5 and having corrugates 9 or ripples/grooves 9 that each extend in a circumferential direction 11 of the corrugated hose 1, i.e., perpendicular to the longitudinal direction 5. Therefore, in a cross-section along the longitudinal direction (shown in Fig. 2), the corrugates 9 build a wave-like pattern. As such, the corrugated hose 1 is flexible in that sense, that it may compensate for deflections within the aircraft, i.e., yield to mechanical loads inserted into the corrugated hose 1 by slightly deforming. In other words, the corrugates 9 allow for the corrugated hose 1 to deform appropriately in response to mechanical loads acting onto the corrugated hose 1, such that the loads are compensated. Although shown as a cylindrical element, it should be appreciated that a cross-section of the corrugated hose 1 perpendicular to the longitudinal direction 5 may also have shapes other than cylindrical, such as rectangular, square, or any other suitable shape.

The bellows 8 as shown is a steel bellows 8 which also has a wave-like cross-section in the longitudinal direction 5 (see Fig. 2). In the shown configuration, the bellows 8 is surrounded by a protective cover 13. The corrugated hose 1 extends through the bellows 8 without contacting it. The bellows 8 itself is connected to the first portion 20 and the second portion 30 of the shroud and interconnects these portions with each other. In other words, the bellows 8 defines a first section of the shroud 4 and a second section of the shroud 4 an connects these section with each other. Since the shroud itself, or rather the first portion 20 and the second portion 30 of the shroud 4 are made from a stiff material (to provide the necessary mechanical stiffness overall), it is necessary to provide the shroud 4 with compensation capabilities similar to those of the corrugated house 1. Therefore, the bellows 8 may compensate for deflections, while the shroud 4 itself is stiff and mechanically supports the whole structure of the gas distribution system 10 on a large scale. The bellows 8 is made from a hydrogen-tight material providing low permeation of Hydrogen. In the configuration shown, the bellows 8 is made from steel.

The corrugated hose 1 comprises or consists of a gas-tight material, preferably steel, exhibiting a very low permeation for Hydrogen, such that diffusion of Hydrogen through the corrugated hose 1 is reduced.

Using steel for the corrugated hose 1, for the shroud 4, and for the bellows 8 further enhances fire/explosion protection, because steel is electrically conducting and electrostatic discharges that might otherwise ignite Oxyhydrogen gases caused by diffusing Hydrogen are avoided. Also, steel provides for welded connections between the shroud 4 and the bellows 8 and between the connecting ends 2, 3 of the corrugated hose 1 with end fittings for connecting to the Hydrogen tank 130 and to the Hydrogen consumer 120, respectively.

The disclosed gas distribution system decreases the amount of conventional sealings to an absolute minimum (only at the connecting ends 2, 3) and therefore enhances hydrogen-tightness.

Fig. 3 shows an aircraft 100 with a fuselage 110, a Hydrogen consumer 120 and a Hydrogen tank 130. As shown, the Hydrogen consumer is a turbine of the aircraft 100. However, the Hydrogen consumer 120 may be any consumer of gaseous Hydrogen. A gas distribution system 10, as described above, connects the Hydrogen tank 130 with the Hydrogen consumer 120. The gas distribution may be configured according to any one of the embodiments described herein.

It should be noted that "comprising" or "including" does not exclude other elements or steps, and "one" or "a" does not exclude a plurality. It should further be noted that features or steps that have been described with reference to any of the above embodiments may also be used in combination with other features or steps of other embodiments described above. Reference signs in the claims are not to be regarded as limitation.

### LIST OF REFERENCE SIGNS

- 1: corrugated hose
- 2: first connecting end
- 3: second connecting end
- 4: shroud
- 5: longitudinal direction
- 6: spacers
- 7: intermediate space
- 8: bellows
- 9: corrugates
- 10: Gas distribution system
- 11: circumferential direction
- 12: flanges
- 13: protective cover
- 20: first portion (of the shroud 4)
- 30: second portion (of the shroud 4)

- 100: Aircraft
- 110: fuselage
- 120: gas consumer, Hydrogen consumer
- 130: gas tank, Hydrogen tank

## Claims

1. A gas distribution system (10) for aircrafts (100), comprising:
a corrugated hose (1) having a first connecting end (2) and a second connecting end (3);
wherein the first connecting end (2) is configured to be connected to a gas tank (130);
wherein the second connecting end (3) is configured to be connected to a gas consumer (120);
wherein the corrugated house (1) is flexible so as to compensate for in-flight deflections of the gas distribution system (10),
**characterized in that** the gas distribution system (10) comprises a non-flexible shroud (4) surrounding the corrugated hose (1) concentrically along a longitudinal direction (5) of the corrugated hose (1), thereby building an intermediate space (7) between the corrugated hose (1) and the shroud (4),
the gas distribution system further comprising at least one bellows (8) connecting a first portion (20) of the shroud (4) with a second portion (30) of the shroud (4), so that the first portion (20) and the second portion (30) are moveable with regard to each other.

2. The gas distribution system (10) of claim 1, further comprising a plurality of spacers (6) in the intermediate space (7), keeping the corrugated hose (1) and the shroud (4) at a radial distance to each other, wherein the spacers (6) are spaced apart from each other along the longitudinal direction (5).

3. The gas distribution system (10) of any one of the preceding claims, wherein the intermediate space (7) is filled with a quenching medium.

4. The gas distribution system (10) of claim 3, wherein the quenching medium is a quenching gas.

5. The gas distribution system (10) of claim 4, wherein the quenching gas is Nitrogen.

6. The gas distribution system (10) of any one of the preceding claims, wherein the shroud (4) comprises at least two flushing openings for flushing the intermediate space (7) and or filling the intermediate space (7) with a quenching medium.

7. The gas distribution system (10) of any one of the preceding claims, wherein the gas distribution system (10) is a distribution system for gaseous Hydrogen.

8. The gas distribution system (10) of claim 7, wherein the corrugated house (1) comprises a material having a low permeability for Hydrogen.

9. The gas distribution system (10) of any one of the preceding claims, wherein the corrugated hose (1) comprises steel.

10. The gas distribution system (10) of any one of the preceding claims, wherein the shroud (4) comprises steel.

11. The gas distribution system (10) of any one of the preceding claims, wherein the corrugated hose (1) comprises an elastomer.

12. The gas distribution system (10) of any one of the preceding claims, wherein the materials of the corrugated hose (1) and of the shroud (4) each comprise a very low tendency for electrostatic discharge.

13. The gas distribution system (10) of any one of the preceding claims, wherein the first connecting end (2) and the second connecting end (3) each comprise a gas-tight sealing.

14. Aircraft (100), comprising:
a fuselage (110);
a Hydrogen consumer (120);
a Hydrogen tank (130); and
a gas distribution system (10) according to any one of the preceding claims;
wherein the gas distribution system (10) fluidly connects the Hydrogen tank (130) with the Hydrogen consumer (120), so that the Hydrogen consumer (120) receives Hydrogen from the Hydrogen tank (130) via the gas distribution system (10).

## Patentansprüche

1. Gasverteilungssystem (10) für Luftfahrzeuge (100), umfassend:
einen Wellschlauch (1) mit einem ersten Anschlussende (2) und einem zweiten Anschlussende (3);
wobei das erste Anschlussende (2) dazu konfiguriert ist, mit einem Gastank (130) verbunden zu werden;
wobei das zweite Anschlussende (3) dazu konfiguriert ist, mit einem Gasverbraucher (120) verbunden zu werden;
wobei der Wellschlauch (1) flexibel ist, um Durchbiegungen des Gasverteilungssystems (10) während des Fluges auszugleichen,
**dadurch gekennzeichnet, dass** das Gasverteilungssystem (10) eine nicht-flexible Umhüllung (4) umfasst, die den Wellschlauch (1) konzentrisch entlang einer Längsrichtung (5) des Wellschlauchs (1) umgibt, wodurch ein Zwischenraum (7) zwischen dem Wellschlauch (1) und der Umhüllung (4) gebildet wird,
wobei das Gasverteilungssystem ferner mindestens einen Faltenbalg (8) umfasst, der einen ersten Abschnitt (20) der Umhüllung (4) mit einem zweiten Abschnitt (30) der Umhüllung (4) verbindet, so dass der erste Abschnitt (20) und der zweite Abschnitt (30) in Bezug zueinander beweglich sind.

2. Gasverteilungssystem (10) nach Anspruch 1, ferner umfassend eine Vielzahl von Abstandshaltern (6) in dem Zwischenraum (7), die den Wellschlauch (1) und die Umhüllung (4) in einem radialen Abstand zueinander halten, wobei die Abstandshalter (6) entlang der Längsrichtung (5) voneinander beabstandet sind.

3. Gasverteilungssystem (10) nach einem der vorhergehenden Ansprüche, wobei der Zwischenraum (7) mit einem Löschmedium gefüllt ist.

4. Gasverteilungssystem (10) nach Anspruch 3, wobei das Löschmedium un Löschgas ist.

5. Gasverteilungssystem (10) nach Anspruch 4, wobei das Löschgas Stickstoff ist.

6. Gasverteilungssystem (10) nach einem der vorhergehenden Ansprüche, wobei die Umhüllung (4) mindestens zwei Spülöffnungen zum Spülen des Zwischenraums (7) und/oder zum Füllen des Zwischenraums (7) mit einem Löschmedium umfasst.

7. Gasverteilungssystem (10) nach einem der vorhergehenden Ansprüche, wobei das Gasverteilungssystem (10) ein Verteilungssystem für gasförmigen Wasserstoff ist.

8. Gasverteilungssystem (10) nach Anspruch 7, wobei der Wellschlauch (1) ein Material mit einer geringen Permeabilität für Wasserstoff umfasst.

9. Gasverteilungssystem (10) nach einem der vorhergehenden Ansprüche, wobei der Wellschlauch (1) Stahl umfasst.

10. Gasverteilungssystem (10) nach einem der vorhergehenden Ansprüche, wobei die Umhüllung (4) Stahl umfasst.

11. Gasverteilungssystem (10) nach einem der vorhergehenden Ansprüche, wobei der Wellschlauch (1) ein Elastomer umfasst.

12. Gasverteilungssystem (10) nach einem der vorhergehenden Ansprüche, wobei die Materialien des Wellschlauchs (1) und der Umhüllung (4) jeweils eine sehr geringe Neigung zu elektrostatischer Entladung aufweisen.

13. Gasverteilungssystem (10) nach einem der vorhergehenden Ansprüche, wobei das erste Anschlussende (2) und das zweite Anschlussende (3) jeweils eine gastreue Abdichtung umfassen.

14. Luftfahrzeug (100), umfassend:
einen Rumpf (110);
einen Wasserstoffverbraucher (120);
einen Wasserstofftank (130); und
ein Gasverteilungssystem (10) nach einem der vorhergehenden Ansprüche;
wobei das Gasverteilungssystem (10) den Wasserstofftank (130) fluidisch mit dem Wasserstoffverbraucher (120) verbindet, so dass der Wasserstoffverbraucher (120) Wasserstoff aus dem Wasserstofftank (130) über das Gasverteilungssystem (10) erhält.

## Revendications

1. Système de distribution de gaz (10) pour aéronefs (100), comprenant :
un tuyau flexible ondulé (1) ayant une première extrémité de raccordement (2) et une seconde extrémité de raccordement (3) ;
dans lequel la première extrémité de raccordement (2) est configurée pour être raccordée à un réservoir de gaz (130) ;
dans lequel la seconde extrémité de raccordement (3) est configurée pour être raccordée à un consommateur de gaz (120) ;
dans lequel le tuyau flexible ondulé (1) est flexible de manière à compenser les déformations en vol du système de distribution de gaz (10),
**caractérisé en ce que** le système de distribution de gaz (10) comprend une gaine non flexible (4) entourant le tuyau flexible ondulé (1) de manière concentrique le long d'une direction longitudinale (5) du tuyau flexible ondulé (1), formant ainsi un espace intermédiaire (7) entre le tuyau flexible ondulé (1) et la gaine (4),
le système de distribution de gaz comprenant en outre au moins un soufflet (8) reliant une première partie (20) de la gaine (4) à une seconde partie (30) de la gaine (4), de sorte que la première partie (20) et la seconde partie (30) soient mobiles l'une par rapport à l'autre.

2. Système de distribution de gaz (10) selon la revendication 1, comprenant en outre une pluralité d'entretoises (6) dans l'espace intermédiaire (7), maintenant le tuyau flexible ondulé (1) et la gaine (4) à une distance radiale l'un de l'autre, dans lequel les entretoises (6) sont espacées les unes des autres le long de la direction longitudinale (5).

3. Système de distribution de gaz (10) selon l'une quelconque des revendications précédentes, dans lequel l'espace intermédiaire (7) est rempli d'un milieu d'extinction.

4. Système de distribution de gaz (10) selon la revendication 3, dans lequel le milieu d'extinction est un gaz d'extinction.

5. Système de distribution de gaz (10) selon la revendication 4, dans lequel le gaz d'extinction est de l'azote.

6. Système de distribution de gaz (10) selon l'une quelconque des revendications précédentes, dans lequel la gaine (4) comprend au moins deux ouvertures de balayage pour balayer l'espace intermédiaire (7) et/ou remplir l'espace intermédiaire (7) avec un milieu d'extinction.

7. Système de distribution de gaz (10) selon l'une quelconque des revendications précédentes, dans lequel le système de distribution de gaz (10) est un système de distribution pour de l'hydrogène gazeux.

8. Système de distribution de gaz (10) selon la revendication 7, dans lequel le tuyau flexible ondulé (1) comprend un matériau ayant une faible perméabilité à l'hydrogène.

9. Système de distribution de gaz (10) selon l'une quelconque des revendications précédentes, dans lequel le tuyau flexible ondulé (1) comprend de l'acier.

10. Système de distribution de gaz (10) selon l'une quelconque des revendications précédentes, dans lequel la gaine (4) comprend de l'acier.

11. Système de distribution de gaz (10) selon l'une quelconque des revendications précédentes, dans lequel le tuyau flexible ondulé (1) comprend un élastomère.

12. Système de distribution de gaz (10) selon l'une quelconque des revendications précédentes, dans lequel les matériaux du tuyau flexible ondulé (1) et de la gaine (4) présentent chacun une très faible tendance à la décharge électrostatique.

13. Système de distribution de gaz (10) selon l'une quelconque des revendications précédentes, dans lequel la première extrémité de raccordement (2) et la seconde extrémité de raccordement (3) comprennent chacune un scellement étanche au gaz.

14. Aéronef (100), comprenant :
un fuselage (110) ;
un consommateur d'hydrogène (120) ;
un réservoir d'hydrogène (130) ; et
un système de distribution de gaz (10) selon l'une quelconque des revendications précédentes ;
dans lequel le système de distribution de gaz (10) relie fluidiquement le réservoir d'hydrogène (130) au consommateur d'hydrogène (120), de sorte que le consommateur d'hydrogène (120) reçoive de l'hydrogène du réservoir d'hydrogène (130) via le système de distribution de gaz (10).
